# EUROPEAN PATENT APPLICATION

(11) **EP 4 459 706 A1**
(43) Date of publication of application: **06.11.2024**
(21) Application number: 22915940.5
(22) Date of filing: 23.12.2022
(51) Int. Cl.: H01M 4/1397, H01M 4/136, H01M 4/36, H01M 4/58, H01M 4/62, H01M 10/054, H01M 10/0562

(54) **ELECTRODE MATERIAL FOR ALL-SOLID BATTERY, ELECTRODE FOR ALL-SOLID BATTERY AND METHOD FOR MANUFACTURING SAME, AND ALL-SOLID BATTERY AND METHOD FOR MANUFACTURING SAME**

(30) Priority: 27.12.2021 JP 2021212401
(71) Applicant: Nippon Electric Glass Co., Ltd., Otsu-shi, Shiga 520-8639 (JP)
(72) Inventor: TANAKA, Ayumu, Otsu-shi, Shiga 520-8639 (JP); YAMAUCHI, Hideo, Otsu-shi, Shiga 520-8639 (JP)
(74) Representative: Tetzner, Michael
(86) International application number: PCT/JP2022/047568
(87) International publication number: WO 2023/127717

(57) **Abstract**

Provided is an electrode material for an all-solid-state battery less likely to cause volume contraction due to crystallization of an active material precursor. An electrode material for an all-solid-state battery contains: an active material precursor having an amorphous phase; and active material crystals.

## Description

### [Technical Field]

The present invention relates to electrode materials for all-solid-state batteries, electrodes for all-solid-state batteries using the electrode materials for all-solid-state batteries, methods for manufacturing electrodes for all-solid-state batteries, all-solid-state batteries, and methods for manufacturing all-solid-state batteries.

### [Background Art]

Lithium-ion secondary batteries have secured their place as high-capacity and light-weight power sources essential for mobile devices, electric vehicles, and so on. However, current lithium-ion secondary batteries employ as their electrolytes, mainly, combustible organic electrolytic solutions, which raises concerns about the risk of burning or explosion. As a solution to this problem, all-solid-state lithium-ion batteries using a solid electrolyte instead of an organic electrolytic solution have been under development. Furthermore, because, as for lithium, there are concerns about such issues as global rise in raw and processed material costs, studies have recently been conducted on all-solid-state sodium-ion secondary batteries as alternatives to all-solid-state lithium-ion secondary batteries.

Patent Literature 1 below discloses positive-electrode active materials represented by Naₓ(Fe₁₋ₐMₐ)_{y}P₂O_{z} (where M represents at least one transition metal element selected from the group consisting of Cr, Mn, Co, and Ni, 1.2 ≤ x ≤ 2.8, 0.95 ≤ y ≤ 1.6, 0 ≤ a ≤ 0.9, and 7 ≤ z ≤ 8) . According to Patent Literature 1, a positive electrode layer containing a positive-electrode active material described above is formed by applying a slurry containing an amorphous glass powder to one of the surfaces of a solid electrolyte, drying it, and then firing it.

### [Citation List]

### [Patent Literature]

[PTL 1]
WO2016/084573

### [Summary of Invention]

### [Technical Problem]

However, in such a method, as in Patent Literature 1, of forming an electrode material layer on a solid electrolyte layer and firing it, volume contraction may occur during crystallization of glass in the firing process and, thus, cracks may develop in the resultant electrode layer.

When, in all-solid-state batteries, the amount of electrode active material supported is increased or the thickness of the electrode material layer is increased for the purpose of increasing the energy density of the batteries, the above-described volume contraction may become more significant. Furthermore, also when the electrode material is finely powdered or the amount of conductive agent added is increased for the purpose of reducing the internal resistance of the battery, the above-described volume contraction may become more significant. Then, if the above-described volume contraction becomes more significant, the electrode layer obtained by sintering may peel off from the solid electrolyte layer. As a result, the interface for ion conduction is lost and, thus, the battery may not work.

An object of the present invention is to provide an electrode material for an all-solid-state battery, an electrode for an all-solid-state battery using the electrode material for an all-solid-state battery, a method for manufacturing an electrode for an all-solid-state battery, an all-solid-state battery, and a method for manufacturing an all-solid-state battery, each of which is less likely to cause volume contraction due to crystallization of an active material precursor.

### [Solution to Problem]

A description will be given of aspects of an electrode material for an all-solid-state battery, an electrode for an all-solid-state battery using the electrode material for an all-solid-state battery, a method for manufacturing an electrode for an all-solid-state battery, an all-solid-state battery, and a method for manufacturing an all-solid-state battery, each of which solves the above challenge.

An electrode material for an all-solid-state battery of Aspect 1 in the present invention contains: an active material precursor having an amorphous phase; and active material crystals.

An electrode material for an all-solid-state battery of Aspect 2 is the electrode material according to Aspect 1, wherein the active material crystals are preferably sintered bodies of the active material precursor.

An electrode material for an all-solid-state battery of Aspect 3 is the electrode material according to Aspect 1 or 2, wherein the active material crystals are preferably contained as a composite with at least one of a solid electrolyte and a conductive agent.

An electrode material for an all-solid-state battery of Aspect 4 is the electrode material according to Aspect 3, wherein a surface of the composite is preferably coated with an amorphous layer.

An electrode material for an all-solid-state battery of Aspect 5 is the electrode material according to Aspect 4, wherein the amorphous layer preferably contains at least one type of constituent elements of the active material crystals.

An electrode material for an all-solid-state battery of Aspect 6 is the electrode material according to Aspect 4 or 5, wherein the amorphous layer is preferably made of sodium phosphate.

An electrode material for an all-solid-state battery of Aspect 7 is the electrode material according to Aspect 4, wherein the amorphous layer may be made of amorphous carbon.

An electrode material for an all-solid-state battery of Aspect 8 is the electrode material according to any one of Aspects 1 to 7, wherein the electrode material is preferably used for a sodium-ion secondary battery.

An electrode material for an all-solid-state battery of Aspect 9 is the electrode material according to any one of Aspects 1 to 8, wherein the active material precursor preferably contains, in terms of % by mole of oxides, 25% to 55% Na₂O, 10% to 30% Fe₂O₃+Cr₂O₃+MnO+CoO+NiO, and 25% to 55% P₂O₅.

An electrode material for an all-solid-state battery of Aspect 10 is the electrode material according to any one of Aspects 1 to 9, wherein the active material crystals are preferably crystals represented by a general formula NaₓM_{y}P₂O_{z} (where M represents at least one transition metal element selected from among Cr, Fe, Mn, Co and Ni, 1.2 ≤ x ≤ 2.8, 0.95 ≤ y ≤ 1. 6, and 6.5 ≤ z ≤ 8) .

An electrode material for an all-solid-state battery of Aspect 11 is the electrode material according to any one of Aspects 3 to 10, wherein the solid electrolyte is preferably at least one selected from the group consisting of β-alumina, β"-alumina, and NASICON crystals.

An electrode material for an all-solid-state battery of Aspect 12 is the electrode material according to any one of Aspects 1 to 11, wherein the electrode material for an all-solid-state battery preferably contains, in terms of % by mass, 1% to 99% the active material precursor, 1% to 99% the active material crystals, 0% to 70% solid electrolyte, and 0% to 20% conductive agent.

An electrode for an all-solid-state battery of Aspect 13 in the present invention is formed of a sintered body of an electrode material layer containing the electrode material for an all-solid-state battery according to any one of Aspects 1 to 12.

An all-solid-state battery of Aspect 14 in the present invention includes as a positive electrode the electrode for an all-solid-state battery according to Aspect 13.

A method for manufacturing an electrode for an all-solid-state battery of Aspect 15 in the present invention includes the steps of: forming an electrode material layer containing an active material precursor having an amorphous phase and active material crystals; and firing the electrode material layer.

A method for manufacturing an electrode for an all-solid-state battery of Aspect 16 is the method according to Aspect 15, wherein the active material crystals are preferably sintered bodies of the active material precursor.

A method for manufacturing an electrode for an all-solid-state battery of Aspect 17 is the method according to Aspect 15 or 16, wherein the active material crystals are preferably contained as a composite with at least one of a solid electrolyte and a conductive agent.

A method for manufacturing an electrode for an all-solid-state battery of Aspect 18 is the method according to Aspect 17, wherein the method preferably includes the step of mixing the composite and a material for forming an amorphous layer to form an amorphous layer on a surface of the composite.

A method for manufacturing an electrode for an all-solid-state battery of Aspect 19 is the method according to Aspect 18, wherein the material for forming an amorphous layer preferably contains at least one type of constituent elements of the active material crystals.

A method for manufacturing an electrode for an all-solid-state battery of Aspect 20 is the method according to Aspect 18 or 19, wherein the material for forming an amorphous layer is preferably sodium phosphate.

A method for manufacturing an electrode for an all-solid-state battery of Aspect 21 is the method according to Aspect 18, wherein the material for forming an amorphous layer may be a surfactant.

A method for manufacturing an all-solid-state battery of Aspect 22 in the present invention includes the step of forming a positive electrode on a solid electrolyte layer by the method for manufacturing an electrode for an all-solid-state battery according to any one of Aspects 15 to 21.

### [Advantageous Effects of Invention]

The present invention enables provision of an electrode material for an all-solid-state battery, an electrode for an all-solid-state battery using the electrode material for an all-solid-state battery, a method for manufacturing an electrode for an all-solid-state battery, an all-solid-state battery, and a method for manufacturing an all-solid-state battery, each of which is less likely to cause volume contraction due to crystallization of an active material precursor.

### [Brief Description of Drawings]

[Fig. 1] Fig. 1 is a schematic diagram of an electrode material layer formed using a composite in which a sintered body containing active material crystals, a solid electrolyte, and a conductive agent is coated with an amorphous layer.
[Fig. 2] Fig. 2 is a schematic diagram of a modification in which the sintered body in Fig. 1 is not coated with the amorphous layer.
[Fig. 3] Fig. 3 is a schematic diagram of an electrode material layer containing an active material precursor and active material crystals each coated with an amorphous layer.
[Fig. 4] Fig. 4 is a schematic diagram of a modification in which the active material crystals in Fig. 3 are not each coated with the amorphous layer.
[Fig. 5]Fig. 5 is a schematic cross-sectional view showing an all-solid-state battery according to an embodiment of the present invention.
[Fig. 6] Fig. 6 is a photograph in plan view of a positive electrode layer obtained in Example 4.
[Fig. 7] Fig. 7 is a photograph in plan view of a positive electrode layer obtained in Comparative Example 1.

### [Description of Embodiments]

Hereinafter, a description will be given of preferred embodiments. However, the following embodiments are merely illustrative and the present invention is not intended to be limited to the following embodiments. Throughout the drawings, members having substantially the same functions may be referred to by the same reference characters.

### [Electrode Material for All-Solid-State Battery]

An electrode material for an all-solid-state battery according to the present invention contains: an active material precursor having an amorphous phase; and active material crystals. The form of the electrode material for an all-solid-state battery is not particularly limited and may be a paste or a powder compact.

The electrode material for an all-solid-state battery according to the present invention is heated and fired, and thus used as an electrode layer for an all-solid-state battery. Therefore, the form of the electrode material for an all-solid-state battery may be an electrode material layer formed of a paste or an electrode material layer formed of a powder compact.

Since the electrode material for an all-solid-state battery according to the present invention contains not only an active material precursor having an amorphous phase, but also active material crystals, this can suppress volume contraction that develops during crystallization of the active material precursor. Therefore, in the electrode material for an all-solid-state battery according to the present invention, cracks can be less likely to develop in an electrode layer to be formed. In addition, the peel-off of the electrode layer to be formed from the solid electrolyte layer can be suppressed, which enables the interface for ion conduction to be held and thus makes the battery work better.

In the case where, in all-solid-state batteries, the amount of electrode active material supported is increased or the thickness of the electrode material layer is increased, the above-described volume contraction may become more significant. Furthermore, also in the case where the electrode material is finely powdered or the amount of conductive agent added is increased, the above-described volume contraction may become significant. However, even in the above cases, the electrode material for an all-solid-state battery according to the present invention can suppress the volume contraction and can make the electrode layer difficult to peel off from the solid electrolyte layer or so on.

Therefore, using the electrode material for an all-solid-state battery according to the present invention, the amount of electrode active material supported can be increased or the thickness of the electrode material layer can be increased. Thus, the energy density of the battery can be increased. In addition, the positive electrode composite material can be finely powdered or the amount of conductive agent added can be increased. Thus, the internal resistance of the battery can be reduced.

Herein, whether or not the active material precursor has an "amorphous phase" can be checked for, for example, when it is one for use in an all-solid-state sodium-ion secondary battery to be described hereinafter, by observing whether or not an amorphous halo is present in the vicinity of 20 = 10° to 45° in an X-ray diffraction spectrum (hereinafter, referred to as an XRD spectrum).

Hereinafter, a description will be given of details of the embodiments.

### (First Embodiment)

In a first embodiment, active material crystals are contained as a composite with at least one of a solid electrolyte and a conductive agent. Therefore, an electrode material for an all-solid-state battery according to the first embodiment contains an active material precursor having an amorphous phase and the above composite. Furthermore, an electrode for an all-solid-state battery according to the first embodiment can be formed by firing an electrode material layer containing the active material precursor having an amorphous phase and the above composite.

An example of the composite that can be used is a sintered body obtained by crystallizing an electrode material containing: an active material precursor having an amorphous phase; and at least one of a solid electrolyte and a conductive agent. The electrode material may be an electrode paste and the composite may be a sintered body obtained by drying the electrode paste to a mass and crystallizing it. Alternatively, the composite may be a sintered body powder obtained by grinding the sintered body. Hereinafter, a description will be given of a specific example of the electrode material for an all-solid-state battery according to the first embodiment.

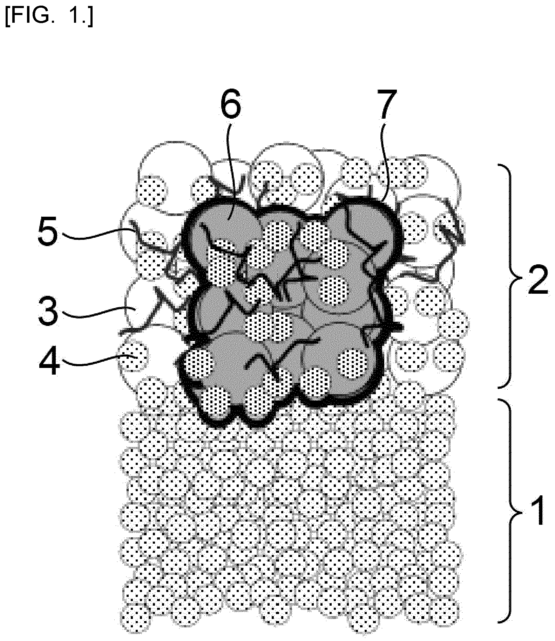

Fig. 1 is a schematic diagram of an electrode material layer formed using a composite in which a sintered body containing active material crystals, a solid electrolyte, and a conductive agent is coated with an amorphous layer.

In Fig. 1, an electrode material layer 2 is formed on a solid electrolyte layer 1. The electrode material layer 2 is formed by applying an electrode paste on the solid electrolyte layer 1. In Fig. 1, the electrode material layer 2 is not yet fired.

The electrode material layer 2 contains: an active material precursor 3 having an amorphous phase; a solid electrolyte 4, and a conductive agent 5. The electrode material layer 2 further contains a composite 6.

The composite 6 is formed of a sintered body containing: active material crystals; a solid electrolyte; and a conductive agent. The firing temperature in forming the composite 6 may be, for example, not lower than 400°C and not higher than 600°C and the firing time at the temperature may be, for example, not less than one minute and not more than 10 hours. The firing can be performed in a reductive atmosphere.

In this embodiment, the active material crystals contained in the composite 6 are formed by crystallizing the same material as the active material precursor 3 by firing. Furthermore, the solid electrolyte and the conductive agent therein are also made of the same materials as the solid electrolyte 4 and the conductive agent 5, respectively.

Since the electrode material layer 2 (the electrode material for an all-solid-state battery) in this embodiment contains not only the active material precursor 3 having an amorphous phase, but also the composite 6 containing active material crystals, this can suppress volume contraction that develops during crystallization of the active material precursor 3. In addition, since the composite 6 is formed of the respective same materials as the active material precursor 3, the solid electrolyte 4, and the conductive agent 5, the ionic conductivity can be further increased and the battery characteristics of the all-solid-state battery can be further increased. The active material crystals, solid electrolyte, and conductive agent contained in the composite 6 may not necessarily be formed of the same materials as the active material precursor 3, the solid electrolyte 4, and the conductive agent 5, respectively.

Furthermore, the surface of the composite 6 shown in Fig. 1 is coated with an amorphous layer 7. In this embodiment, the surface of the composite 6 is coated with an amorphous layer 7 containing at least one type of constituent elements of the active material crystals. By coating the surface of the composite 6 with the amorphous layer 7, the fluidity of materials constituting the electrode material layer 2 can be further increased and, thus, the electrode material layer 2 can be more sufficiently sintered.

The type of the amorphous layer 7 is not particularly limited and the amorphous layer 7 is made of, for example, sodium phosphate when used in an electrode material for an all-solid-state sodium-ion secondary battery to be described hereinafter. In this case, the amorphous layer 7 is formed, for example, as a sol-gel coating of sodium phosphate. The amorphous layer 7 is preferably made of a material capable of easily forming an ion path, like sodium phosphate. When the amorphous layer 7 is made of sodium phosphate, the composite 6 can be coated with sodium phosphate, for example, by mixing the composite 6 with an aqueous solution of sodium phosphate serving as a material for forming an amorphous layer and drying the mixture.
Alternatively, the amorphous layer 7 may be made of amorphous carbon. In this case, the amorphous layer 7 made of amorphous carbon can be formed, for example, by mixing the composite 6 with a surfactant, such as polyethylene oxide nonylphenyl ether, and firing the mixture. The firing temperature may be, for example, not lower than 400°C and not higher than 800°C and the firing time at the temperature may be, for example, not less than one minute and not more than 10 hours. The firing can be performed in a N₂ atmosphere.

The surface of the composite 6 may be partially coated with the amorphous layer 7 or the surface of the composite 6 may be entirely coated with the amorphous layer 7. A proportion of 50% or more of the surface of the composite 6 is preferably coated with the amorphous layer 7, 60% or more thereof is more preferably coated with the amorphous layer 7, and 80% or more thereof is even more preferably coated with the amorphous layer 7.

The thickness of the amorphous layer 7 is not particularly limited and may be, for example, not less than 0.1 nm and not more than 1000 nm.

In this embodiment, the content of the composite 6 contained in the electrode material layer 2 (100% by mass) is, in terms of % by mass, preferably not less than 1%, more preferably not less than 5%, even more preferably not less than 10%, particularly preferably not less than 30%, preferably not more than 99%, more preferably not more than 95%, even more preferably not more than 90%, yet even more preferably not more than 70%, and particularly preferably not more than 50%. When the content of the composite 6 is the above lower limit or more, this can further suppress volume contraction that develops during crystallization of the active material precursor 3. When the content of the composite 6 is the above upper limit or less, the fluidity of materials constituting the electrode material layer 2 can be further increased and, thus, the electrode material layer 2 can be more sufficiently sintered. In addition, the battery characteristics of the all-solid-state battery can be further increased.

The content of the active material precursor 3 contained in the electrode material layer 2 (100% by mass) may be, for example, in terms of % by mass, not less than 1% and not more than 90%. The content of the solid electrolyte 4 contained in the electrode material layer 2 (100% by mass) may be, for example, in terms of % by mass, not less than 0% and not more than 70%. The content of the conductive agent 5 contained in the electrode material layer 2 (100% by mass) may be, for example, in terms of % by mass, not less than 0% and not more than 20%.

In this embodiment, the content of active material crystals contained in the composite 6 (100% by mass) is, in terms of % by mass, preferably not less than 10%, more preferably not less than 20%, even more preferably not less than 50%, preferably not more than 99%, more preferably not more than 98%, and even more preferably not more than 95%. When the content of active material crystals is within the above range, this can further suppress volume contraction that develops during crystallization of the active material precursor 3 having an amorphous phase.

The content of solid electrolyte contained in the composite 6 (100% by mass) may be, for example, in terms of % by mass, not less than 1% and not more than 70%. The content of conductive agent contained in the composite 6 (100% by mass) may be, for example, in terms of % by mass, not less than 0% and not more than 20%.

Alternatively, the composite 6 may be a sintered body powder obtained by grinding the above sintered body. In this case, the average particle diameter of the composite 6 may be, for example, not less than 0.1 µm and not more than 100 µm.

In the present invention, the average particle diameter means D50 (a volume-based average particle diameter) and refers to a value measured by the laser diffraction/scattering method.

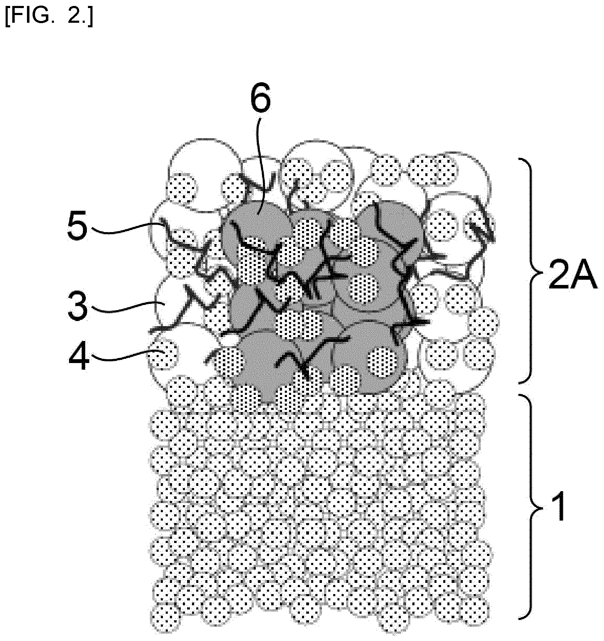

Alternatively, as in an electrode material layer 2A in a modification shown in Fig. 2, the surface of the composite 6 may not be coated with an amorphous layer 7. Also in this case, the use of the composite 6 can suppress volume contraction that develops during crystallization of the active material precursor 3. In addition, the ionic conductivity in the electrode material layer 2A can be further increased and the battery characteristics of the all-solid-state battery can be further increased.

### (Second Embodiment)

An electrode material for an all-solid-state battery according to a second embodiment contains: an active material precursor having an amorphous phase; and active material crystals. Furthermore, an electrode for an all-solid-state battery according to the second embodiment can be formed by firing an electrode material layer containing the active material precursor having an amorphous phase and the active material crystals. The active material crystals just described may be an active material crystal powder obtained by grinding the active material crystals. Hereinafter, a description will be given of a specific example of the electrode material for an all-solid-state battery according to the second embodiment.

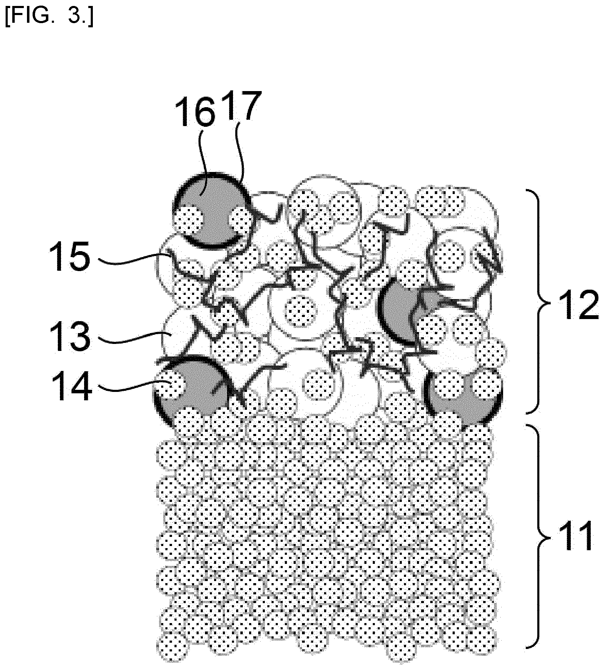

Fig. 3 is a schematic diagram of an electrode material layer containing an active material precursor and active material crystals each coated with an amorphous layer.

In Fig. 3, an electrode material layer 12 is formed on a solid electrolyte layer 11. The electrode material layer 12 is formed by applying an electrode paste on the solid electrolyte layer 11. In Fig. 3, the electrode material layer 12 is not yet fired.

The electrode material layer 12 contains: an active material precursor 13 having an amorphous phase; a solid electrolyte 14, and a conductive agent 15. The electrode material layer 12 further contains active material crystals 16. The active material crystals 16 are formed by crystallizing the same material as the active material precursor 13 by firing. The firing temperature in forming the active material crystals 16 may be, for example, not lower than 400°C and not higher than 600°C and the firing time at the temperature may be, for example, not less than one minute and not more than 10 hours. The firing can be performed in a reductive atmosphere.

Since the electrode material layer 12 (the electrode material for an all-solid-state battery) in this embodiment contains not only the active material precursor 13 having an amorphous phase, but also the active material crystals 16, this can suppress volume contraction that develops during crystallization of the active material precursor 13. Alternatively, the active material crystals 16 may be formed of a different material from the active material precursor 13.

The surfaces of the active material crystals 16 shown in Fig. 3 are each coated with an amorphous layer 17. By coating the surfaces of the active material crystals 16 with the amorphous layer 17, the fluidity of materials constituting the electrode material layer 12 can be further increased and, thus, the electrode material layer 12 can be more sufficiently sintered.

The type of the amorphous layer 17 is not particularly limited and the amorphous layer 17 is made of, for example, amorphous carbon. Alternatively, the amorphous layer 17 may contain at least one type of constituent elements of the active material crystals 16. When used in an all-solid-state sodium-ion secondary battery to be described hereinafter, the amorphous layer 17 is made of, for example, sodium phosphate.

The surfaces of the active material crystals 16 may be each partially coated with the amorphous layer 17 or may be each entirely coated with the amorphous layer 7. A proportion of 50% or more of each of the surfaces of the active material crystals 16 is preferably coated with the amorphous layer 17, 60% or more thereof is more preferably coated with the amorphous layer 17, and 80% or more thereof is even more preferably coated with the amorphous layer 17.

The thickness of the amorphous layer 17 is not particularly limited and may be, for example, not less than 0.1 nm and not more than 1000 nm.

In this embodiment, the content of the active material crystals 16 contained in the electrode material layer 12 (100% by mass) is, in terms of % by mass, preferably not less than 1%, more preferably not less than 3%, even more preferably not less than 5%, particularly preferably not less than 10%, preferably not more than 99%, more preferably not more than 90%, even more preferably not more than 80%, yet even more preferably not more than 75%, and particularly preferably not more than 40%. When the content of the active material crystals 16 is the above lower limit or more, this can further suppress volume contraction that develops during crystallization of the active material precursor 13. When the content of the active material crystals 16 is the above upper limit or less, the fluidity of materials constituting the electrode material layer 12 can be further increased and, thus, the electrode material layer 12 can be more sufficiently sintered. In addition, the battery characteristics of the all-solid-state battery can be further increased.

The content of the active material precursor 13 contained in the electrode material layer 12 (100% by mass) may be, for example, in terms of % by mass, not less than 1% and not more than 99%. The content of the solid electrolyte 14 contained in the electrode material layer 12 (100% by mass) may be, for example, in terms of % by mass, not less than 0% and not more than 70%. The content of the conductive agent 15 contained in the electrode material layer 12 (100% by mass) may be, for example, in terms of % by mass, not less than 0% and not more than 20%.

The active material crystals 16 may be ground and used as an active material crystal powder. In this case, the average particle diameter of the active material crystals 16 may be, for example, not less than 0.1 µm and not more than 100 µm.

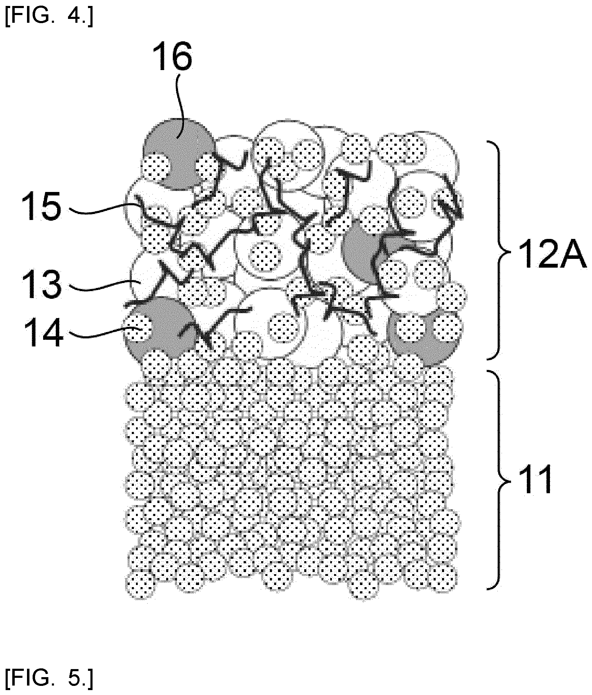

Alternatively, as in an electrode material layer 12A in a modification shown in Fig. 4, the surfaces of the active material crystals 16 may not be each coated with an amorphous layer 17. Also in this case, the use of the active material crystals 16 can suppress volume contraction that develops during crystallization of the active material precursor 13.

Hereinafter, a description will be given of specific examples of component materials of the electrode material for an all-solid-state battery according to the present invention when the electrode material is used as a positive electrode of an all-solid-state sodium-ion secondary battery.

### (Active Material Precursor)

The active material precursor (active material precursor powder) contains an amorphous phase. The active material precursor powder like this is preferably made of an amorphous oxide material that generates active material crystals when fired. In the case where the active material precursor powder is made of an amorphous oxide material, when the amorphous oxide material is fired, it not only generates active material crystals, but also can be softened and fluidified to form a denser electrode layer. As a result, an ion-conducting path is formed better, which is favorable. In the present invention, the term "amorphous oxide material" is not limited to a fully amorphous oxide material and includes those partially containing crystals (for example, those having a crystallinity of 10% or less).

The active material precursor powder preferably contains, in terms of % by mole of the following oxides, 25% to 55% Na₂O, 10% to 30% Fe₂O₃+Cr₂O₃+MnO+CoO+NiO, and 25% to 55% P₂O₅. The reasons why the composition is limited as just described will be described below. In the following description of the respective contents of the components, "%" refers to "% by mole" unless otherwise stated.

Na₂O is a main component of the active material crystals represented by a general formula NaₓM_{y}P₂O_{z} (where M represents at least one transition metal element selected from among Cr, Fe, Mn, Co and Ni, 1.2 ≤ x ≤ 2.8, 0.95 ≤ y ≤ 1.6, and 6.5 ≤ z ≤ 8). The content of Na₂O is preferably 25% to 55% and more preferably 30% to 50%. When the content of Na₂O is within the above range, the charge and discharge capacities of the all-solid-state sodium-ion secondary battery can be further increased.

Fe₂Oₛ, Cr₂O₃, MnO, CoO, and NiO are also main components of the active material crystals represented by the general formula NaₓM_{y}P₂O_{z}. The content of Fe₂O₃+Cr₂O₃+MnO+CoO+NiO is preferably 10% to 30% and more preferably 15% to 25%. When the content of Fe₂O₃+Cr₂O₃+MnO+CoO+NiO is the above lower limit or more, the charge and discharge capacities of the all-solid-state sodium-ion secondary battery can be further increased. On the other hand, when the content of Fe₂O₃+Cr₂O₃+MnO+CoO+NiO is the above upper limit or less, this can make it less likely that undesirable crystals, such as Fe₂O₂, Cr₂O₂, MnO, CoO or NiO, precipitate. In order to increase the cycle characteristics of the all-solid-state sodium-ion secondary battery, Fe₂O₃ is preferably positively contained in the active material precursor powder. The content of Fe₂O₂ is preferably 1% to 30%, more preferably 5% to 30%, even more preferably 10% to 30%, and particularly preferably 15% to 25%. The content of each component of Cr₂O₂, MnO, CoO, and NiO is preferably 0% to 30%, more preferably 10% to 30%, and even more preferably 15% to 25%. In containing at least two components selected from among Fe₂O₂, Cr₂O₂, MnO, CoO, and NiO in the active material precursor powder, the total content of them is preferably 10% to 30% and more preferably 15% to 25%.

P₂O₅ is also a main component of the active material crystals represented by the general formula NaₓM_{y}P₂O_{z}. The content of P₂O₅ is preferably 25% to 55% and more preferably 30% to 50%. When the content of P₂O₅ is within the above range, the charge and discharge capacities of the all-solid-state sodium-ion secondary battery can be further increased.

The active material precursor powder may contain, in addition to the above components, V₂O₅, Nb₂O₅, MgO, Al₂O₃, TiO₂, ZrO₂ or Sc₂O₃. These components have the effect of increasing the conductivity (electronic conductivity), which facilitates the enhancement of the rapid charge and discharge characteristics of the electrode active material. The total content of these components is preferably 0% to 25% and more preferably 0.2% to 10%. When the content of these components is the above upper limit or less, heterogeneous crystals not contributing to the battery characteristics are less likely to be generated and, thus, the charge and discharge capacities of the all-solid-state sodium-ion secondary battery can be further increased.

Aside from the above components, the active material precursor powder may contain SiO₂, B₂O₃, GeO₂, Ga₂O₃, Sb₂O₃ or Bi₂O₃. When containing any of these components, an active material precursor powder having an increased glass formation ability and being more homogeneous is easy to obtain. The total content of these components is preferably 0% to 25% and more preferably 0.2% to 10%. Because these components do not contribute to the battery characteristics, an excessively large content of them leads to a tendency to decrease the charge and discharge capacities.

The active material precursor powder is preferably made by melting a raw material batch and forming the melt into a shape. This method is preferred because an amorphous active material precursor powder having excellent homogeneity can be easily obtained. Specifically, the active material precursor powder can be produced in the following manner.

First, raw materials are formulated to give a desired composition, thus obtaining a raw material batch. Next, the obtained raw material batch is melted. The melting temperature may be appropriately adjusted to make the raw material batch homogeneously melted. For example, the melting temperature is preferably 800°C or higher and more preferably 900°C or higher. The upper limit of the melting temperature is not particularly limited, but an excessively high melting temperature leads to energy loss or evaporation of the sodium component and so on. Therefore, the melting temperature is preferably not higher than 1500°C and more preferably not higher than 1400°C.

Next, the obtained melt is formed into a shape. The method for forming the melt into a shape is not particularly limited. For example, the melt may be formed into a film with rapid cooling by pouring the melt between a pair of cooling rolls or may be formed into an ingot by casting the melt into a mold.

Subsequently, the obtained formed body is ground to obtain an active material precursor powder. The average particle diameter of the active material precursor powder is preferably not less than 0.01 µm and less than 0.7 µm, more preferably not less than 0.03 µm and not more than 0.6 µm, even more preferably not less than 0.05 µm and not more than 0.6 µm, and particularly preferably not less than 0.1 µm and not more than 0.5 µm. When the average particle diameter of the active material precursor powder is the above lower limit or more, the cohesion between the powder particles of the active material precursor powder when used in paste form can be reduced and, thus, the active material precursor powder can be more easily dispersed into the paste. In addition, in mixing the active material precursor powder with a solid electrolyte powder or the like, the active material precursor powder can be more uniformly dispersed into the mixture, which can reduce the internal resistance and further increase the charge and discharge capacities. On the other hand, when the average particle diameter of the active material precursor powder is the above upper limit or less, the crystallization temperature can be further decreased. In addition, the amount of ions diffused per unit surface area of the electrode material increases, which can further reduce the internal resistance. Furthermore, in mixing the active material precursor powder with a solid electrolyte powder, the adhesion between the active material precursor powder and the solid electrolyte powder can be further increased and, therefore, the mechanical strength of the electrode layer can be further increased. As a result, the charge and discharge capacities can be further increased. Alternatively, the adhesion between the electrode layer and the solid electrolyte layer can be further increased, which can make the electrode layer more difficult to peel off from the solid electrolyte layer.

### (Active Material Crystals)

The active material crystals are preferably sintered bodies of the same material as the above-described active material precursor powder. Therefore, the active material crystals are preferably crystals represented by a general formula NaₓM_{y}P₂O_{z} (where M represents at least one transition metal element selected from among Cr, Fe, Mn, Co and Ni, 1.2 ≤ x ≤ 2.8, 0.95 ≤ y ≤ 1.6, and 6.5 ≤ z ≤ 8). Examples of the active material crystals like this that can be used include Na₂FeP₂O₇, Na_{3.64}Fe_{2.18}(P₂O₇)₂ (= Na_{1.82}Fe_{1.09}P₂O₇), Na_{3.12}Fe_{2.44}(P₂O₇)₂ (= Na_{1.56}Fe_{1.22}P₂O₇), Na₃Fe₂(PO₄)P₂O₇ (= Na₂Fe_{1.33}P₂O_{7.33}), Na₂MnP₂O₇, Na₂CoP₂O₇, and Na₂NiP₂O₇. Among them, Na₃Fe₂(PO₄)P₂O₇ has a high capacity per unit mass and a high working voltage, which enables production of a battery having a higher energy density.

As described previously, the surfaces of the active material crystals may be each coated with an amorphous layer. The active material crystals may be contained as a composite with at least one of a solid electrolyte and a conductive agent. In this case, the surface of the composite may be coated with an amorphous layer.

### (Solid Electrolyte)

The solid electrolyte (solid electrolyte powder) is a component that plays a role in conducting ions through an electrode layer, such as a positive electrode layer, in the all-solid-state sodium-ion secondary battery.

Examples of the solid electrolyte powder include beta-alumina and NASICON crystals both of which have excellent sodium-ion conductivity. Beta-alumina includes two types of crystals: β-alumina (theoretical composition formula: Na₂O·11Al₂O₃) and β"-alumina (theoretical composition formula: Na₂O·5.3Al₂O₃). β"-alumina is a metastable material and is therefore generally used in a state in which Li₂O or MgO is added as a stabilizing agent thereto. β"-alumina has a higher sodium-ion conductivity than β-alumina. Therefore, β"-alumina alone or a mixture of β"-alumina and β-alumina is preferably used and Li₂O-stabilized β"-alumina (Na_{1.7}Li_{0.3}Al_{10.7}O₁₇) or MgO-stabilized β"-alumina ((Al_{10.32}Mg_{0.68}O₁₆)(Na_{1.68}O)) is more preferably used.

Examples of the NASICON crystal include Na₃Zr₂Si₂PO₁₂, Na_{3.2}Zr_{1.3}Si_{2.2}P_{0.7}O_{10.5}, Na₃Zr_{1.6}Ti_{0.4}Si₂PO₁₂, Na₃Hf₂Si₂PO₁₂, Na_{3.4}Zr_{0.9}Hf_{1.4}Al_{0.6}Si_{1.2}P_{1.8}O₁₂, Na₃Zr_{1.7}Nb_{0.24}Si₂PO₁₂, Na_{3.6}Ti_{0.2}Y_{0.7}Si_{2.8}O₉, Na₃Zr_{1.88}Y_{0.12}Si₂PO₁₂, Na_{3.12}Zr_{1.88}Y_{0.12}Si₂PO₁₂, and Na_{3.6}Zr_{0.13}Yb_{1.67}Si_{0.11}P_{2.9}O₁₂. Among them, Na_{3.12}Zr_{1.88}Y_{0.12}Si₂PO₁₂ is particularly preferred as NASICON crystals because it has excellent sodium-ion conductivity.

The average particle diameter of the solid electrolyte powder is preferably not less than 0.05 µm and not more than 3 µm, more preferably not less than 0.05 µm and less than 1.8 µm, even more preferably not less than 0.05 µm and not more than 1.5 µm, particularly preferably not less than 0.1 µm and not more than 1.2 µm, and most preferably not less than 0.1 µm and not more than 0.7 µm. If the average particle diameter of the solid electrolyte powder is too small, not only the solid electrolyte powder becomes difficult to uniformly mix together with the active material precursor powder, but also may absorb moisture or become carbonated to decrease the ionic conductivity or may promote an excessive reaction with the active material precursor powder. As a result, the internal resistance of the electrode material layer increases and, thus, the voltage characteristics and the charge and discharge capacities tend to decrease. On the other hand, if the average particle diameter of the solid electrolyte powder is too large, this significantly inhibits the softening and flow of the active material precursor powder and, therefore, the resultant electrode layer tends to have poor smoothness to decrease the mechanical strength and tends to increase the internal resistance.

### (Conductive Agent)

The conductive agent is a component that forms a conducting path in the electrode material. For example, a conductive carbon can be used as the conductive agent. Preferred conductive carbons are powdered or fibrous conductive carbons, including highly conductive carbon blacks, such as acetylene black and Ketjen black. In adding the conductive carbon, it is preferably added when the active material precursor powder is ground. The conductive carbon not only plays a role as a grinding aid to enable homogeneous mixture with the active material precursor powder, but also reduces excessive fusion of the active material precursor powder particles during the firing, thus making it easier to ensure the electrical conductivity and facilitating the enhancement of the rapid charge and discharge characteristics of the all-solid-state sodium-ion secondary battery.

### (Binder)

The electrode material for an all-solid-state battery according to the present invention may contain a binder. The binder is a material for binding the component materials (component material powders) together. Examples of the binder include: cellulose derivatives, such as carboxymethyl cellulose, hydroxypropylmethyl cellulose, hydroxypropyl cellulose, ethyl cellulose, hydroxyethyl cellulose, and hydroxymethyl cellulose, or water-soluble polymers, such as polyvinyl alcohol; thermosetting resins, such as thermosetting polyimide, phenolic resin, epoxy resin, urea resin, melamine resin, unsaturated polyester resin, and polyurethane; polycarbonate-based resins, such as polypropylene carbonate; and polyvinylidene fluoride.

### [Electrode for All-Solid-State Battery and All-Solid-State Battery]

Fig. 5 is a schematic cross-sectional view showing an all-solid-state battery according to an embodiment of the present invention. As shown in Fig. 5, an all-solid-state battery 21 includes a solid electrolyte layer 22, a positive electrode layer 23, a negative electrode layer 24, a first current collector layer 25, and a second current collector layer 26. In this embodiment, the all-solid-state battery 21 is an all-solid-state sodium-ion secondary battery.

The solid electrolyte layer 22 has a first principal surface 22a and a second principal surface 22b opposed to each other. The positive electrode layer 23 is provided on the first principal surface 22a of the solid electrolyte layer 22. The first current collector layer 25 is provided on a principal surface of the positive electrode layer 23 located on the side thereof opposite to the solid electrolyte layer 22. Furthermore, the negative electrode layer 24 is provided on the second principal surface 22b of the solid electrolyte layer 22. The second current collector layer 26 is provided on a principal surface of the negative electrode layer 24 located on the side thereof opposite to the solid electrolyte layer 22. The first current collector layer 25 and the second current collector layer 26 may not necessarily be provided.

### (Positive Electrode Layer)

In this embodiment, the positive electrode layer 23 is a sintered body of an electrode material layer made of the above-described electrode material for an all-solid-state battery according to the present invention. Therefore, in the firing process in forming the positive electrode layer 23, volume contraction is less likely to occur during crystallization of the active material precursor. Accordingly, cracks are less likely to develop in the positive electrode layer 23 to be formed and peel-off of the positive electrode layer 23 from the solid electrolyte layer 22 is less likely to occur. Hence, the all-solid-state battery 21 including the above positive electrode layer 23 can hold the interface for ion conduction and thus work better.

The thickness of the positive electrode layer 23 is preferably 20 µm or more, more preferably 50 µm or more, even more preferably 80 µm or more, particularly preferably 100 µm or more, and most preferably 120 µm or more. In this case, the all-solid-state battery 21 can achieve a higher capacity. If the thickness of the positive electrode layer 23 is too large, not only the resistance to electron conduction becomes high to make it likely that the discharge capacity and the operating voltage decrease, but also the stress due to contraction during firing becomes large to make it likely that peel-off occurs. Therefore, the thickness of the positive electrode layer 23 is preferably not more than 150 µm.

The amount of positive-electrode active material contained and supported in the positive electrode layer 23 is preferably 3 mg/cm² or more, more preferably 5 mg/cm² or more, even more preferably 7 mg/cm² or more, particularly preferably 9 mg/cm² or more, and most preferably 12 mg/cm² or more. In this case, the all-solid-state battery 21 can achieve a higher capacity. The upper limit of the amount of positive-electrode active material supported is not particularly limited, but it may be, for example, 100 mg/cm².

The positive electrode layer 23 can be produced, for example, by the following method.

An electrode material layer made of the above-described electrode material for an all-solid-state battery is formed on the first principal surface 22a of the solid electrolyte layer 22. The electrode material layer can be obtained, for example, by applying a slurry of the above-described electrode material for an all-solid-state battery and drying it. The slurry may contain, as necessary, a binder, a plasticizer, a solvent, and/or so on.

In mixing the component materials, a mixer, such as a planetary centrifugal mixer or a tumbler mixer, or a general grinder, such as a mortar, a mortar mixer, a ball mill, an attritor, a vibrating ball mill, a satellite ball mill, a planetary ball mill, a jet mill or a bead mill, can be used.

The drying temperature of the slurry is not particularly limited, but it may be, for example, not lower than 30°C and not higher than 100°C. The drying time for the slurry is not particularly limited, but it may be, for example, not less than 10 minutes and not more than 600 minutes.

Next, the obtained electrode material layer is fired. Thus, a positive electrode layer 23 can be obtained. The atmosphere during the firing is preferably a reductive atmosphere. Examples of the reductive atmosphere include atmospheres containing at least one reducing gas selected from among H₂, NH₃, CO, H₂S, and SiH₄. From the viewpoint of efficiently reducing Fe ions in the active material precursor powder from trivalent to divalent ions, the atmosphere preferably contains at least one selected from H₂, NH₃ and CO and more preferably contains H₂ gas. In using H₂ gas, an inert gas, such as N₂, is preferably mixed with H₂ gas for the purpose of reducing the risks of explosion and the like during the firing. Specifically, the reducing gas preferably contains, in terms of % by volume, 90% to 99.9% N₂ and 0.1% to 10% H₂, more preferably contains 90% to 99.5% N₂ and 0.5% to 10% H₂, and even more preferably contains 92% to 99% N₂ and 1 to 8% H₂.

The firing temperature (maximum temperature) is preferably 400°C to 600°C, more preferably 410°C to 580°C, even more preferably 420°C to 575°C, particularly preferably 425°C to 560°C, and most preferably 450°C to 530°C. If the firing temperature is too low, the crystallization of the active material precursor powder becomes insufficient and, thus, a remaining amorphous phase serves as a high-resistance portion, which tends to decrease the voltage characteristics and charge and discharge capacities of the all-solid-state battery 21. On the other hand, if the firing temperature is too high, the active material precursor powder particles excessively fuse together to form coarse particles. Therefore, the specific surface area of the active material tends to be small and the charge and discharge characteristics of the all-solid-state battery 21 tend to decrease. In addition, the active material precursor powder and the solid electrolyte powder may react with each other during the firing and, thus, crystals not contributing to charge and discharge (such as maricite NaFePO₄ crystals) may precipitate. As a result, the charge and discharge capacities of the all-solid-state battery 21 may decrease. Alternatively, elements contained in the active material precursor powder and elements contained in the solid electrolyte powder may be mutually dispersed during the firing and, thus, a high-resistance layer may be partially formed, which may decrease the rate characteristics of the all-solid-state battery 21.

The firing time (the holding time at the maximum temperature during the firing) is preferably less than three hours, more preferably two hours or less, even more preferably an hour or less, particularly preferably 45 minutes or less, and most preferably 30 minutes or less. If the firing time is too long, the active material precursor powder particles excessively fuse together and, thus, coarse particles are likely to be formed. As a result, the specific surface area of the active material tends to be small and the charge and discharge characteristics of the all-solid-state battery 21 tend to decrease. In addition, in the all-solid-state battery 21, the active material precursor powder and the solid electrolyte powder may react with each other during the firing and, thus, crystals not contributing to charge and discharge (such as maricite NaFePO₄ crystals) may precipitate. As a result, the charge and discharge capacities may decrease. Alternatively, elements contained in the active material precursor powder and elements contained in the solid electrolyte powder may be mutually dispersed during the firing and, thus, a high-resistance layer may be partially formed, which may decrease the rate characteristics of the all-solid-state battery 21. On the other hand, if the firing time is too short, the crystallization of the active material precursor powder becomes insufficient and, thus, a remaining amorphous phase serves as a high-resistance portion, which tends to decrease the voltage characteristics and charge and discharge capacities of the all-solid-state battery 21. Therefore, the firing time is preferably not less than one minute and more preferably not less than five minutes.

For the firing, an electric heating furnace, a rotary kiln, a microwave heating furnace, a high-frequency heating furnace or the like can be used.

### (Solid Electrolyte Layer)

The solid electrolyte layer 22 is preferably made of a sodium-ion-conductive oxide. Particularly, the solid electrolyte layer 22 is preferably made of the same material as the solid electrolyte powder examples of which have been given for the above-described electrode material for an all-solid-state battery according to the present invention.

The thickness of the solid electrolyte layer 22 is preferably in a range of 5 µm to 1500 µm and more preferably in a range of 20 µm to 200 µm. If the thickness of the solid electrolyte layer 22 is too small, the mechanical strength decreases and, thus, the solid electrolyte layer 22 is liable to breakage. Therefore, an internal short circuit is likely to develop. If the thickness of the solid electrolyte layer 22 is too large, the distance of sodium-ion conduction accompanying charge and discharge becomes long and the internal resistance therefore becomes high, which makes it likely that the discharge capacity and the operating voltage decrease. In addition, the energy density per unit volume of the all-solid-state battery 21 is also likely to decrease.

### (Negative Electrode Layer)

The negative electrode layer 24 preferably contains a negative-electrode active material capable of absorbing and releasing sodium. The type of the negative-electrode active material is not particularly limited and examples include: crystals containing at least one selected from Nb and Ti, and O; metallic crystals of at least one selected from Sn, Bi, and Sb; and other active material crystals. Alternatively, graphite or hard carbon may be used as the negative-electrode active material. Still alternatively, metal, such as metallic sodium, may be used.

The thickness of the negative electrode layer 24 is preferably in a range of 0.3 µm to 300 µm and more preferably in a range of 3 µm to 150 µm. If the thickness of the negative electrode layer 24 is too small, the absolute capacity (mAh/g) of the negative electrode tends to decrease. If the thickness of the negative electrode layer 24 is too large, the resistance becomes high and, therefore, the capacity (mAh/g) tends to decrease.

The negative electrode layer 24 can be produced, for example, using a slurry containing a negative-electrode active material precursor powder and, as necessary, a solid electrolyte powder and/or a conductive agent. As necessary, a binder, a plasticizer, a solvent, and/or so on are added to the slurry. The negative electrode layer 24 can be produced by applying the slurry onto the second principal surface 22b of the solid electrolyte layer 22, drying it, and then firing it. Alternatively, the negative electrode layer 24 may be produced by applying the slurry onto a base material made of PET (polyethylene terephthalate) or so on, drying the slurry to make a green sheet, and then firing the green sheet. Still alternatively, the negative electrode layer 24 may be made of metal, in which case the negative electrode layer 24 can be formed by sputtering, vapor evaporation or the like.

### (Current Collector Layer)

The material for the first current collector layer 25 and the second current collector layer 26 is not particularly limited, but metallic materials, such as aluminum, titanium, silver, copper, stainless steel or an alloy of any of them, can be used for each of the layers. These metallic materials may be used singly or in combination of two or more of them. The alloy of any of them means an alloy containing at least one of the above metals. The thickness of each of the first current collector layer 25 and the second current collector layer 26 is not particularly limited, but may be in a range of 0.01 µm to 100 µm.

The method for forming the first current collector layer 25 and the second current collector layer 26 is not particularly limited and examples include physical vapor deposition methods, such as evaporation coating and sputtering, and chemical vapor deposition methods, such as thermal CVD, MOCVD, and plasma CVD. Other methods for forming the first current collector layer 25 and the second current collector layer 26 include liquid-phase deposition methods, such as plating, the sol-gel method, and spin coating. However, the first current collector layer 25 and the second current collector layer 26 are preferably formed on the positive electrode layer 23 or the negative electrode layer 24 by sputtering because excellent adhesion is provided.

Although the description in the above embodiment has been given of an all-solid-state sodium-ion secondary battery in which a material having sodium-ion conductivity is used, the electrode material for an all-solid-state battery according to the present invention may be used for any other all-solid-state battery, such as an all-solid-state lithium-ion secondary battery in which a material having lithium-ion conductivity is used.

Furthermore, although the description in the above embodiment has been given of an electrode for an all-solid-state battery in which the above-described electrode material for an all-solid-state battery according to the present invention is used for the positive electrode layer 23, an all-solid-state battery may be formed by using the electrode for an all-solid-state battery according to the present invention as the negative electrode layer 24.

Hereinafter, the present invention will be described in more detail with reference to specific examples. The present invention is not at all limited to the following examples and can be embodied in appropriately modified forms without changing the gist of the invention.

### (Example 1)

### (a) Making of Positive-Electrode Active Material Precursor Powder

Using sodium metaphosphate (NaPO₃), iron oxide (Fe₂O₃), and orthophosphoric acid (H₃PO₄) as raw materials, these powdered raw materials were formulated to give a composition of, in terms of % by mole, 40% Na₂O, 20% Fe₂O₃, and 40% P₂O₅ and melted at 1250°C for 45 minutes in an air atmosphere. Thereafter, the melt was poured between a pair of rotating rollers and formed into a shape with rapid cooling, thus obtaining a film-like glass having a thickness of 0.1 mm to 2 mm. The obtained film-like glass was ground in a ball mill and a planetary ball mill to obtain a glass powder (positive-electrode active material precursor powder) having an average particle diameter of 0.2 µm. As a result of powder X-ray diffraction (XRD) measurement, the obtained glass powder was confirmed to be amorphous (contain an amorphous phase).

### (b) Making of Active Material Crystal Powder

A film-like glass obtained in the same manner as in (a) was fired at 600°C for an hour in a mixed gas of 4% by volume H₂ and 96% by volume N₂. The sample after the firing was ground in a ball mill, thus obtaining a powder (active material crystal powder) having an average particle diameter of 2 µm. When the obtained active material crystal powder was checked for powder X-ray diffraction pattern, Na₂FeP₂O₇ crystals were confirmed.

### (c) Making of Solid Electrolyte Layer and Solid Electrolyte Powder

Li₂O-stabilized β"-alumina (manufactured by Ionotec Ltd., composition formula: Na_{1.7}Li_{0.3}Al_{10.7}O₁₇) was processed into a 0.5 mm thick sheet, thus obtaining a solid electrolyte layer. Furthermore, the Li₂O-stabilized β"-alumina in sheet form was ground in a ball mill and a planetary ball mill, thus obtaining a solid electrolyte powder having an average particle diameter of 0.3 µm.

### (d) Making of Electrode Paste

The positive-electrode active material precursor powder, the active material crystal powder, the solid electrolyte powder, all of which were obtained as above, and acetylene black (SUPER C65 manufactured by TIMCAL) as a conductive agent were weighed to give the ratio described in Table 1 and these powders were mixed for 30 minutes with an agate pestle in an agate mortar. An amount of 20 parts by mass of polypropylene carbonate was added to 100 parts by mass of the obtained mixed powder and 110 parts by mass of N-methylpyrrolidinone was further added to the mixture, followed by well stirring with a planetary centrifugal mixer, thus obtaining an electrode paste.

### (e) Production of Test Cell

The electrode paste obtained in (d) was applied, with an area of 1 cm² and a thickness of 80 µm, to one of the surfaces of the solid electrolyte layer obtained in (c) and then dried at 70°C for four hours, thus forming a positive-electrode material layer. In this state, the positive-electrode material layer was fired at 500°C for 30 minutes in a mixed gas of 4% by volume H₂ and 96% by volume N₂ to form a 100 µm thick positive electrode layer on the one surface of the solid electrolyte layer. All the above operations were performed in an environment with a dew point of -40°C or lower.

When the obtained positive electrode layer was checked for powder X-ray diffraction pattern, Na₂FeP₂O₇ crystals were confirmed. In the obtained positive electrode layer, a crystalline diffraction line originating from the solid electrolyte powder used was confirmed.

Next, a current collector formed of a 300 nm thick gold electrode was formed on the surface of the obtained positive electrode layer using a sputtering device (stock number "SC-701AT" manufactured by Sanyu Electron Co., Ltd.). Thereafter, in an argon atmosphere with a dew point of -60°C or lower, metallic sodium serving as a counter electrode was pressure-bonded to the other surface of the solid electrolyte layer and the obtained product was placed on a lower lid of a coin cell and covered with an upper lid, thus producing a CR2032-type test cell.

### (Example 2)

An amount of 50 g of glass powder obtained in the same manner as in (a) of Example 1 and 5 g of surfactant (stock number "BLAUNON N-510" manufactured by Aoki Oil Industrial Co., Ltd) were mixed and the mixture was fired at 600°C for an hour in an N₂ gas. The mixture after the firing was ground in a mortar and a jet mill, thus obtaining an amorphous carbon-coated active material crystal powder (an active material crystal powder the surface of which was coated with an amorphous layer made of amorphous carbon) having an average particle diameter of 2 µm. When the obtained amorphous carbon-coated active material crystal powder was checked for powder X-ray diffraction pattern, Na₂FeP₂O₇ crystals were confirmed.

An electrode paste was made in the same manner as in (d) of Example 1 except that the amorphous carbon-coated active material crystal powder obtained as above was used instead of the active material crystal powder, and furthermore a CR2032-type test cell was produced in the same manner as in (e) of Example 1.

### (Example 3)

The positive-electrode active material precursor powder, the solid electrolyte powder, both of which were obtained in Example 1, and acetylene black (SUPER C65 manufactured by TIMCAL) as a conductive agent were weighed to give a mass ratio of 83:13:4 and these powders were mixed for 30 minutes with an agate pestle in an agate mortar. An amount of 20 parts by mass of polypropylene carbonate was added to 100 parts by mass of the obtained mixed powder and 110 parts by mass of N-methylpyrrolidinone was further added to the mixture, followed by well stirring with a planetary centrifugal mixer, thus obtaining an electrode paste.

The obtained electrode paste was dried to a mass and fired at 500°C for 0.5 hours in a mixed gas of 4% by volume H₂ and 96% by volume N₂. The composite after the firing was ground in a mortar and classified with a sieve, thus obtaining a composite powder having an average particle diameter of 10 µm. When the obtained composite powder was checked for powder X-ray diffraction pattern, Na₂FeP₂O₇ crystals were confirmed.

Separately, the positive-electrode active material precursor powder, the solid electrolyte powder, both of which were obtained in Example 1, and acetylene black (SUPER C65 manufactured by TIMCAL) as a conductive agent were weighed to give a mass ratio of 83:13:4 and these powders were mixed for 30 minutes with an agate pestle in an agate mortar, thus obtaining a mixed powder.

An amount of 20 parts by mass of polypropylene carbonate was added to a powder obtained by mixing 80 parts by mass of the mixed powder and 20 parts by mass of the above-described composite powder, and 110 parts by mass of N-methylpyrrolidinone was further added to the mixture, followed by well stirring with a planetary centrifugal mixer, thus obtaining an electrode paste. The respective compositions of the mixed powder (other than the composite powder) and the composite powder, and the composition of the mixture of them (the content ratio of solids) are as shown in Table 1. A CR2032-type test cell was produced in the same manner as in (e) of Example 1 except that the obtained electrode paste was used.

### (Example 4)

An amount of 10 g of composite powder obtained in the same manner as in Example 3 and 1 g of 5% by mass NaH₂PO₄ aqueous solution were mixed and the mixture was vacuum-dried. The obtained sodium phosphate-coated composite was ground in a mortar and classified with a sieve, thus obtaining a sodium phosphate-coated composite powder (a composite powder the surface of which was coated with an amorphous layer made of sodium phosphate) having an average particle diameter of 10 µm.

An electrode paste was made in the same manner as in Example 3 except that the sodium phosphate-coated composite powder obtained as above was used instead of the composite powder, and furthermore a CR2032-type test cell was produced.

### (Example 5)

An electrode paste was made in the same manner as in Example 2 except that the composition of the positive-electrode material was changed as described in Table 2, and furthermore a CR2032-type test cell was produced.

### (Examples 6 to 8)

An electrode paste was made in the same manner as in Example 4 except that the composition of the positive-electrode material was changed as described in Table 2, and furthermore a CR2032-type test cell was produced.

### (Example 9)

A glass powder was obtained in the same manner as in Example 1 except that sodium metaphosphate (NaPO₃), iron oxide (Fe₂O₃), and orthophosphoric acid (H₃PO₄) were formulated to give a composition of, in terms of % by mole, 37.5% Nₐ₂O, 25% Fe₂O₃, and 37.5% P₂O₅. Using the obtained glass powder, an amorphous carbon-coated active material crystal powder having an average particle diameter of 2 µm was obtained in the same manner as in Example 2. When the obtained active material crystal powder was checked for powder X-ray diffraction pattern, Na₃Fe₂(PO₄)P₂O₇ (= Na₂Fe_{1.33}P₂O_{7.33}) crystals were confirmed.

An electrode paste was made in the same manner as in (d) of Example 1 except that the amorphous carbon-coated active material crystal powder obtained as above was used as an active material crystal powder, and furthermore a CR2032-type test cell was produced in the same manner as in (e) of Example 1.

### (Example 10)

An electrode paste was made in the same manner as in Example 9 except that the composition of the positive-electrode material was changed as described in Table 3, and furthermore a CR2032-type test cell was produced.

### (Comparative Example 1)

The positive-electrode active material precursor powder, the solid electrolyte powder, both of which were obtained in Example 1, and acetylene black (SUPER C65 manufactured by TIMCAL) as a conductive agent were weighed to give the ratio described in Table 1 and these powders were mixed for 30 minutes with an agate pestle in an agate mortar. An electrode paste was made in the same manner as in (d) of Example 1 except that the mixed powder obtained as above was used, and furthermore a CR2032-type test cell was produced in the same manner as in (e) of Example 1.

### [Evaluations]

### (Amount of Contraction During Firing)

In each of Examples and Comparative Example, powder materials of solids before being turned into a paste were weighed out, put into a 10 mm diameter compaction mold, and uniaxially pressed into a shape therein, thus making a powder compact. The volume of the obtained powder compact was measured with a gas displacement pycnometer AccuPyc 1330 manufactured by Micromeritics Instrument Corporation. Furthermore, the powder compact was fired at 500°C for 30 minutes in a mixed gas of 4% by volume H₂ and 96% by volume N₂. The volume of the sample after the firing was measured with the above-mentioned gas displacement pycnometer. In addition, the amount of contraction of the sample was determined from the volume change thereof between before and after the firing.

### (Battery Characteristics)

The produced test cells underwent a charge and discharge test at 30°C to measure their cell capacities. The results are shown in Tables 1 to 3. In the charge and discharge test, the C-rate was set at 0.02 C.

### (Appearance After Firing)

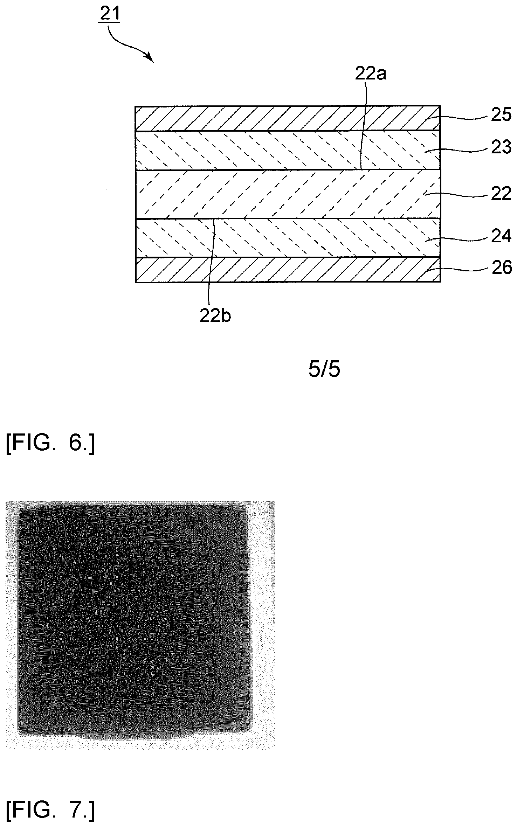

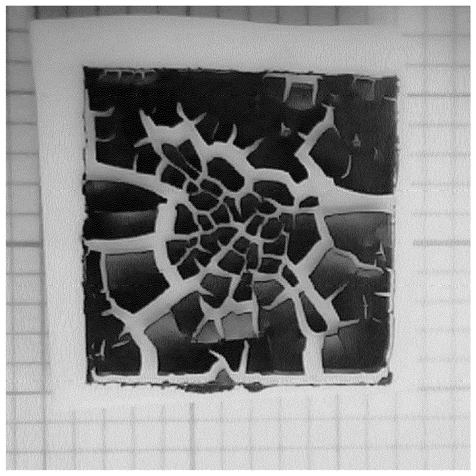

The presence or absence of cracks in each of the positive electrode layers after the firing was observed visually. As a result, as shown by a photograph in Fig. 6, neither cracks nor peel-off was observed in Example 4. Likewise, neither cracks nor peel-off was observed in Examples 2 and 3. The reason for this can be that the positive-electrode material during firing had excellent fluidity and the degree of sintering was good. In Example 1, peel-off occurred, but no cracks were observed. In contrast, as shown in Fig. 7, cracks were observed in the positive electrode layer in Comparative Example 1.

As for the degree of sintering of the electrode, the electrode was observed by a SEM (scanning electron microscope), the obtained image was binarized and determined in terms of voidage by image analysis software, and the degree of sintering was evaluated based on the following evaluation criteria.

### [Evaluation Criteria]

A ... voidage of 3% or less
B ... voidage of more than 3% and 10% or less
C ... voidage of more than 10% and 20% or less
D ... voidage of more than 20%

The results are shown in Tables 1 to 3 below.

**[Table 1]**

| | | Example 1 | Example 2 | Example 3 | | | Example 4 | | | Comp. Example 1 |
|---|---|---|---|---|---|---|---|---|---|---|
| | | | | Other Than Composite Powder | Composite Powder | Total | Other Than Composite Powder | Composite Powder 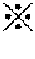 ² | Total | |
| Composition of Positive-Electrode Material (% by mass) | Positive-Electrode Active Material Precursor Powder | 66.4 | 66.4 | 66.4 | | 66.4 | 66.4 | | 66.4 | 83 |
| | Active Material Crystal Powder | 16.6 | 16.6 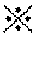 ¹ | | 16.6 | 16.6 | | 16.6 | 16.6 | |
| | Solid Electrolyte Powder | 13 | 13 | 10.4 | 2.6 | 13 | 10.4 | 2.6 | 13 | 13 |
| | Conductive Agent | 4 | 4 | 3.2 | 0.8 | 4 | 3.2 | 0.8 | 4 | 4 |
| | Total | 100 | 100 | 80 | 20 | 100 | 80 | 20 | 100 | 100 |
| Composition of Positive-Electrode Active Material Precursor Powder (% by mole) | | 40Na₂O-20Fe₂O₃-40P₂O₅ | | | | | | | | |
| Active Material Crystal Powder | | Na₂FeP₂O₇ | | | | | | | | |
| Amont of Contraction During Firing | | 4% | 4% | | 4% | | | 4% | | 5 % |
| Battery Characteristics (mAh/g) | | Not measured | 18 | | 89 | | | 90 | | Not measured |
| Degree of Sintering of Electrode | | D | C | | B | | | A | | A |
| Cracks and Peel-Off of Electrode Layer | | No cracks Peel-off | No | | No | | | No | | Cracks Peel-Off |
| 1 Use of Amorphous Carbon-Coated Active Material Crystal Powder | | | | | | | | | | |
| 2 Use of Sodium Phosphate-Coated Composite Powder | | | | | | | | | | |

**[Table 2]**

| | | Example 5 | Example 6 | | | Example 7 | | | Example 8 | | |
|---|---|---|---|---|---|---|---|---|---|---|---|
| | | | Other Than Composite Powder | Composite Powder 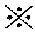 ² | Total | Other Than Composite Powder | Composite Powder 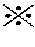 ² | Total | Other Than Composite Powder | Composite Powder 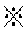 ² | Total |
| Composition of Positive-Electrode Material (% by mass) | Positive-Electrode Active Material Precursor Powder | 49.8 | 49.8 | | 49.8 | 33.2 | | 49.8 | 16.6 | | 16.6 |
| | Active Material Crystal Powder | 33.2 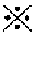 ¹ | | 33.2 | 33.2 | | 49.8 | 33.2 | | 66.4 | 66.4 |
| | Solid Electrolyte Powder | 13 | 7.8 | 5.2 | 13 | 5.2 | 7.8 | 13 | 2.6 | 10.4 | 13 |
| | Conductive Agent | 4 | 2.4 | 1.6 | 4 | 1.6 | 2.4 | 4 | 0.8 | 3.2 | 4 |
| | Total | 100 | 60 | 40 | 100 | 40 | 60 | 100 | 20 | 80 | 100 |
| Composition of Positive-Electrode Active Material Precursor Powder (% by mole) | | 40Na₂O-20Fe₂O₃-40P₂O₅ | | | | | | | | | |
| Composition of Positive-Electrode Active Material Precursor Powder | | Na₂FeP₂O₇ | | | | | | | | | |
| Amont of Contraction During Firing | | 3% | | 3% | | | 2% | | | 1% | |
| Battery Characteristics (mAh/g) | | 10 | | 49 | | | 23 | | | 12 | |
| Degree of Sintering of Electrode | | D | | B | | | C | | | D | |
| Cracks and Peel-Off of Electrode Layer | | No | | No | | | No | | | No | |
| 1 Use of Amorphous Carbon-Coated Active Material Crystal Powder | | | | | | | | | | | |
| 2 Use of Sodium Phosphate-Coated Composite Powder | | | | | | | | | | | |

**[Table 3]**

| | | Example 9 | Example 10 |
|---|---|---|---|
| Composition of Positive-Electrode Material (% by mass) | Positive-Electrode Active Material Precursor Powder | 66.4 | 49.8 |
| | Active Material Crystal Powder | 16.6 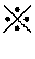 ¹ | 33.2 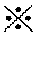 ¹ |
| | Solid Electrolyte Powder | 13 | 13 |
| | Conductive Agent | 4 | 4 |
| | Total | 100 | 100 |
| Composition of Positive-Electrode Active Material Precursor Powder (% by mol) | | 40Na₂O-20Fe₂O₃-40P₂O₅ | |
| Composition of Positive-Electrode Active Material Precursor Powder | | Na₃Fe₂(PO₄)P₂O₇ | |
| Amont of Contraction During Firing | | 4% | 3% |
| Battery Characteristics (mAh/g) | | 23 | 13 |
| Degree of Sintering of Electrode | | C | D |
| Cracks and Peel-Off of Electrode Layer | | No | No |
| 1 Use of Amorphous Carbon-Coated Active Material Crystal Powder | | | |

It was confirmed from Table 1 to 3 that, in Examples 1 to 10 where an electrode paste to which not only an active material precursor powder but also active material crystals were added was used, volume contraction due to crystallization of the active material precursor was supressed. On the other hand, in Comparative Example 1 where no active material crystals were added into the electrode paste, volume contraction could not sufficiently be suppressed.

### [Reference Signs List]

1, 11 ... solid electrolyte layer
2, 2A, 12, 12A ... electrode material layer
3, 13 ... active material precursor
4, 14 ... solid electrolyte
5, 15 ... conductive agent
6 ... composite
7, 17 ... amorphous layer
16 ... active material crystal
21 ... all-solid-state battery
22 ... solid electrolyte layer
22a, 22b ... first and second principal surfaces
23 ... positive electrode layer
24 ... negative electrode layer
25, 26 ... first and second current collector layers

## Claims

1. An electrode material for an all-solid-state battery, the electrode material containing: an active material precursor having an amorphous phase; and active material crystals.

2. The electrode material for an all-solid-state battery according to claim 1, wherein the active material crystals are sintered bodies of the active material precursor.

3. The electrode material for an all-solid-state battery according to claim 1 or 2, wherein the active material crystals are contained as a composite with at least one of a solid electrolyte and a conductive agent.

4. The electrode material for an all-solid-state battery according to claim 3, wherein a surface of the composite is coated with an amorphous layer.

5. The electrode material for an all-solid-state battery according to claim 4, wherein the amorphous layer contains at least one type of constituent elements of the active material crystals.

6. The electrode material for an all-solid-state battery according to claim 4, wherein the amorphous layer is made of sodium phosphate.

7. The electrode material for an all-solid-state battery according to claim 4, wherein the amorphous layer is made of amorphous carbon.

8. The electrode material for an all-solid-state battery according to claim 1 or 2, the electrode material being used in a sodium-ion secondary battery.

9. The electrode material for an all-solid-state battery according to claim 1 or 2, wherein the active material precursor contains, in terms of % by mole of oxides, 25% to 55% Na₂O, 10% to 30% Fe₂O₃+Cr₂O₃+MnO+CoO+NiO, and 25% to 55% P₂O₅.

10. The electrode material for an all-solid-state battery according to claim 1 or 2, wherein the active material crystals are crystals represented by a general formula NaₓM_{y}P₂O_{z} (where M represents at least one transition metal element selected from among Cr, Fe, Mn, Co and Ni, 1.2 ≤ x ≤ 2.8, 0.95 ≤ y ≤ 1.6, and 6.5 ≤ z ≤ 8) .

11. The electrode material for an all-solid-state battery according to claim 3, wherein the solid electrolyte is at least one selected from the group consisting of β-alumina, β"-alumina, and NASICON crystals.

12. The electrode material for an all-solid-state battery according to claim 1 or 2, wherein the electrode material for an all-solid-state battery contains, in terms of % by mass, 1% to 99% the active material precursor, 1% to 99% the active material crystals, 0% to 70% solid electrolyte, and 0% to 20% conductive agent.

13. An electrode for an all-solid-state battery, the electrode being formed of a sintered body of an electrode material layer containing the electrode material for an all-solid-state battery according to claim 1 or 2.

14. An all-solid-state battery comprising as a positive electrode the electrode for an all-solid-state battery according to claim 13.

15. A method for manufacturing an electrode for an all-solid-state battery, the method comprising the steps of:
forming an electrode material layer containing an active material precursor having an amorphous phase and active material crystals; and
firing the electrode material layer.

16. The method for manufacturing an electrode for an all-solid-state battery according to claim 15, wherein the active material crystals are sintered bodies of the active material precursor.

17. The method for manufacturing an electrode for an all-solid-state battery according to claim 15 or 16, wherein the active material crystals are contained as a composite with at least one of a solid electrolyte and a conductive agent.

18. The method for manufacturing an electrode for an all-solid-state battery according to claim 17, the method comprising the step of mixing the composite and a material for forming an amorphous layer to form an amorphous layer on a surface of the composite.

19. The method for manufacturing an electrode for an all-solid-state battery according to claim 18, wherein the material for forming an amorphous layer contains at least one type of constituent elements of the active material crystals.

20. The method for manufacturing an electrode for an all-solid-state battery according to claim 18, wherein the material for forming an amorphous layer is sodium phosphate.

21. The method for manufacturing an electrode for an all-solid-state battery according to claim 18, wherein the material for forming an amorphous layer is a surfactant.

22. A method for manufacturing an all-solid-state battery, the method comprising the step of forming a positive electrode on a solid electrolyte layer by the method for manufacturing an electrode for an all-solid-state battery according to claim 15 or 16.
